# EUROPEAN PATENT APPLICATION

(11) **EP 3 581 375 A1**
(43) Date of publication of application: **18.12.2019**
(21) Application number: 19175433.2
(22) Date of filing: 20.05.2019
(51) Int. Cl.: B32B 1/08, B32B 25/08, B32B 25/14, B32B 25/16, B32B 27/08, B32B 27/18, B32B 27/32

(54) **HOSE FOR TRANSPORTING FLUIDS**

(30) Priority: 13.06.2018 IT 201800006289
(71) Applicant: FITT S.p.A, 36066 Sandrigo (Vicenza) (IT)
(72) Inventor: STRAZZARI, Luca, 36066 Sandrigo (Vicenza) (IT); PEGORARO, Davide, 36066 Sandrigo (Vicenza) (IT)
(74) Representative: Feltrinelli, Secondo Andrea

(57) **Abstract**

The present invention regards a hose for conveying fluids, comprising a tubular layer (2, 3) and a reinforcement element (4, 4a) embedded in the volume of said tubular layer (2, 3) and designated to confer to the hose resistance against depression, pressure and compression.

## Description

### TECHNICAL FIELD OF THE INVENTION

The present invention regards a hose for conveying fluids, in particular a system for discharging or conveying food products.

### STATE OF THE PRIOR ART

Generally, discharge systems consist of various elements, such as hoses, fittings, pumps, tanks, shredding machines and WCs.

As regards the management and transportation of fluids, used are various types of hoses made of plastic material, such as:
- rigid pipes, for example made of PVC-U, PP, PE, manufactured and transported as straight bars, generally with maximum length of 12 metres;
- semi-rigid pipes, for example made of PE, manufactured and transported as rolls, but with limited flexibility and limited possibility of execution or installation with narrow radii of curvature;
- flexible hoses without rigid helical reinforcements, with or without fabric reinforcements, for example made of PVC-P, thermoplastic elastomers and rubbers, manufactured and transported as rolls.

Given that they have no helical reinforcement element, these products do not allow use even for suctioning and they do not guarantee non-deformability/resistance against crushing, should they be subjected to external stress. Furthermore, the products indicated above cannot be installed with narrow radii of curvature, given that they do not guarantee satisfactory performance especially if compared with products having helical reinforcements suitable for the purpose.

Other hoses that are used are flexible hoses with helical rigid reinforcements, with or without fabric reinforcements, for example made of PVC-P with reinforcement made of PVC-U or metal, rubber with metal reinforcement and fabric reinforcements.

These products allow use, even for suctioning, and they guarantee non-deformability/resistance against crushing, should they be subjected to external stress. The hoses now indicated also allow the use of very narrow radii of curvature.

It is often convenient to use flexible pipes, instead of rigid ones, so as to be able to carry out curvatures, even narrow, depending on the application and reduce the length of the hose required in an installation, and thus limit the number of connection points. Limiting the number of fittings and curves also clearly allows reducing head losses.

Furthermore, many applications require the use of flexible pipes so as to allow the displacement thereof or manual handling of the hose (for example the refuelling hose).

Conveniently, flexible hoses allow a particularly quick installation which comes in handy in terms of reducing costs.

As regards flexible hoses with helical rigid reinforcements, hoses made of PVC-P are advantageous from an economic point of view given the low value of the raw materials uses with respect to the other polymers besides the ease of manufacturing which is carried out by means of extrusion.

Flexible PVC is a mixture of the PVC polymer and various additives including plasticisers which allow to obtain a material that is sufficiently flexible at ambient temperature.

Other flexible hoses with helical rigid reinforcements are, for example, vulcanised rubber hoses, selected should some technical features be required by the application, such as for example extended use temperature range, high chemical stability, absence of liquid plasticisers. As regards this, the rubbers used are generally natural rubber, butyl rubber, EPDM, chloroprene rubber, silicone rubber. For these products, the helical reinforcement element is generally metallic.

The cost of these hoses is high due to the high economic value of the materials used. Furthermore, such hoses cannot be obtained by means of direct extrusion, but only through a discontinuous and particularly expensive production process.

EP2032352B1 describes a solution according to the prior state of the art.

However, the hoses proposed up to now however cannot simultaneously guarantee a good resistance to crushing (in particular should they be used for suctioning operations), the possibility of use with very narrow radii of curvature and the capacity to limit emission of odour from the internal of the hose towards the external.

Furthermore, with particular reference to the food industry, the hoses according to the state of the art are not capable of guaranteeing the characteristics now indicated and simultaneously not release towards the internal harmful substances or substances such to alter the food products subject of transportation.

### OBJECTS OF THE INVENTION

An object of the present invention is to provide a new hose for conveying fluids.

Another object of the present invention is to provide a new hose for conveying fluids with low emission of odour.

Another object of the present invention is to provide a new hose for conveying fluids in waste water discharge systems, for example of boats.

Another object of the present invention is to provide a new hose for conveying food products.

Another object of the present invention is to provide a new hose capable of simultaneously guaranteeing a good resistance to crushing, the possibility of use with very narrow radii of curvature and the capacity to limit the emissions of odour from the internal of the hose towards the external.

Another object of the present invention is to provide a new hose for conveying food products that does not release harmful substances or substances such to alter the food products subject of transportation, towards the internal.

According to an aspect of invention, a hose according to claim 1 is provided for.

The dependent claims refer to preferred and advantageous embodiments of the invention.

### BRIEF DESCRIPTION OF THE DRAWINGS

Other characteristics and advantages of the invention will be more apparent from the description of an embodiment of a hose, illustrated by way of example in the attached drawings wherein:
- figure 1 is a perspective view of a portion of a hose according to the present invention as well as of a step of a method for manufacturing it;
- figure 2 is a sectional view along line II-II of figure 2,
- figure 3 is a sectional view along line III-III of figure 1;
- figure 4 is a view - in enlarged scale and with sectional details - of a part of the hose of figure 1;
- figures 5 to 8 are views respectively similar to figures 1 to 4 with reference to a hose according to another embodiment according to the present invention; and
- figures 9 to 14 are graphs illustrating results of the conducted tests.

### EMBODIMENTS OF THE INVENTION

An object of the present invention is a hose 1 for conveying fluids comprising a tubular layer 2, 3 and a reinforcement element 4, 4a, optionally spiral, embedded in the volume of the tubular layer 2, 3 and designated to confer to the hose resistance against depression, pressure and compression, the tubular layer 2, 3 being made, preferably entirely, of at least one thermoplastic elastomer of the TPE-S type, without liquid plasticisers at 23°C at a pressure equivalent to 1 atm, while the reinforcement element is made, preferably entirely, of at least one polypropylene polymer (PP), preferably homopolymer PP.

More in particular, the tubular layer 2 and/or 3 can be made of a flexible polymeric material B comprising a thermoplastic compound C1 of polyolefin nature, preferably selected in the group comprising polypropylenes, polyethylenes or the like, and an elastomeric compound C2, the polymeric material B is selected from polymeric materials substantially free of liquid plasticising agents or in the group comprising polymeric materials free of polyvinyl chloride (PVC), while said elastomeric compound C2 is selected in the group comprising SEBS, SEPS, EPDM and polyolefin elastomers.

C1 and C2 can be present in the following percentages by weight, wherein the weighted percentage of the sum C1 + C2 with respect to the weight of the polymeric material B is identical for all samples:
a) %C1=50-%C2=50;
b) %C1=40-%C2=60;
c) %C1=30-%C2=70;
d) %C1=25-%C2=75;
e) %C1=20-%C2=80;
f) %C1=10-%C2=90; or
g) %C1=5-%C2=95

The materials thus obtained could have a hardness comprised between 96 Shore A and 52 Shore A measured according to ISO 868.

In particular, such tubular layer 2, 3 extends over the entire or substantially the entire longitudinal extension of the hose 1.

Even more in particular, the tubular layer 2, 3 extends around the longitudinal symmetry axis x-x of the hose 1 over the entire longitudinal extension of the hose. Such tubular layer 2 and/or 3 is preferably liquid-tight.

A hose according to the present invention can be obtained using any suitable method.

The helical reinforcement could instead be constructed by joining the extruded profiles wound on a calibrator spindle.

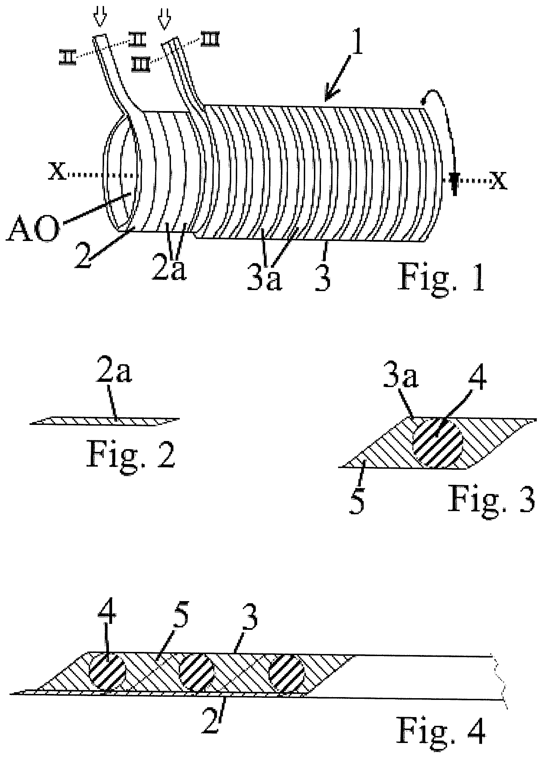

With reference to figures 1 to 4, illustrated is a hose 1 according to the present invention, which optionally comprise an inner tubular layer 2 obtained by means of a plurality of first turns 2a made of extruded polymeric material as well as an outer tubular layer 3 applied onto the inner tubular layer 2 and obtained by means of a plurality of second turns 3a made of extruded polymeric material. The hose 1, optionally have a circular section.

Furthermore, a spiral reinforcement element 4 embedded in a volume of polymeric material 5 of the outer tubular layer 3 is provided for. As indicated above, the reinforcement 4 confers to the hose, in particular, resistance against depression, pressure and compression.

The hose then delimits a through axial opening AO for the through-flow of the fluid, for example waste water.

The volume or the polymeric material of the inner tubular layer 2, the volume 5 or the polymeric material of the outer tubular layer 3 and/or the reinforcement 4 could be additive-added with compounds, to confer malodorous substances spread reduction performance.

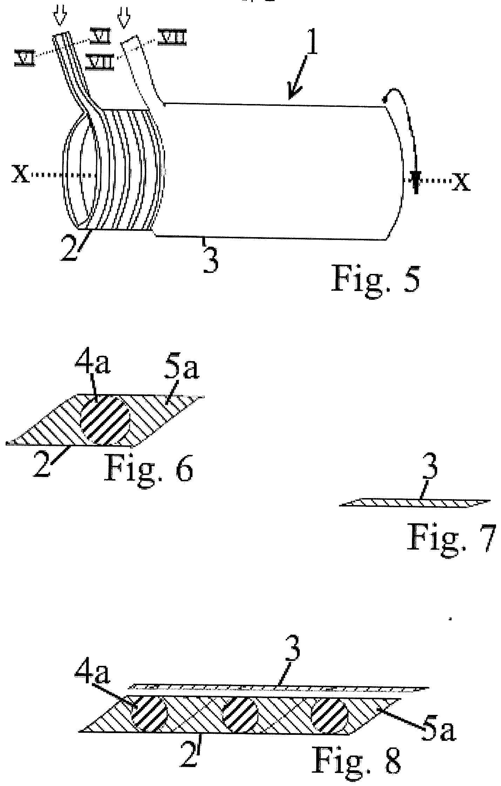

Figures 5 to 8 instead illustrate another hose 1 according to the present invention, which is very similar to the one described above, but it has a spiral reinforcement element 4a embedded in a mass or volume of polymeric material 5a of the inner tubular layer 2.

The inner tubular layer 2, the volume 5a of the outer tubular layer 3 and/or the reinforcement 4, 4a could be additive-added with adsorbing/absorbing-action compounds, to confer malodorous substances spread reduction performance.

Such adsorbing/absorbing-action compounds may for example comprise zinc ricinoleate, activated carbons, cyclodextrins, zeolite, clays and/or zinc oxide, which is/are substantially uniformly or homogeneously distributed in the base polymeric material or in the mixture of base polymeric materials of the tubular layer.

These compounds have an adsorbing/absorbing action with the property of adsorbing, absorbing, retaining the malodorous substances with which such compounds come into contact.

Scents, fragrances of natural or synthetic origin, for example vanillin, extract of lavender, mint, citrus and/or cinnamomum camphora, can also be suitably added to the composition or mixture of the components of the hose with the aim of concealing possible mild unpleasant odours or make the odour of the polymeric material pleasant.

Anti-microbial agents - for example zinc pyrithione and/or silver-based anti-microbial agents - can also be suitably added to the mixture or composition of the components of the hose with the aim of reducing the proliferation of bacteria. Such components can be present at a concentration by weight with respect to the weight of the base polymeric material or in the mixture of base polymeric materials constituting the layer at direct contact with the fluid (such as internal skin for example) equal to about 0.04 - 0.4%.

The reinforcement element 4, 4a could have a capital D-shaped or rectangular-shaped cross-section, as described in the international patent application number PCT/IB2017/055962. More in particular, the substantially capital-D-shaped cross-section 4 can have a substantially straight base side of the D-shaped element substantially parallel or coaxial to the longitudinal symmetry axis x-x of the hose and, potentially, a curved or dome-shaped part of the D-shaped element projecting from the substantially straight base side and distal from the axial cavity of the hose with respect to the substantially straight side. Optionally, a third and a fourth bridge-like connection section of the substantially straight side and of the curved or dome-shaped part could also be provided for.

The cross-section is in this case taken along a plane in which the longitudinal symmetry axis of the hose lies, i.e. a plane of the bundle or of the sheaf of planes having the longitudinal symmetry axis such as line in common.

The reinforcement element 4, 4a could have a cross-section even different from the one illustrated in PCT/IB2017/055962.

The helical reinforcement in a hose according to the present invention can be rightward or leftward.

Naturally, the layers 2 and 3 described above are optional, in the sense that even only one of them could be present, with or without reinforcement element 4, 4a.

A hose according to the present invention is in particular suitable to be used in waste, sewage or grey water discharge systems, in particular in boats.

Potentially, such hose is a sea water suctioning hose for supplying the WC, a delivery hose towards a tank, a hose for conveying from the tank to a shredding machine, a hose for conveying from a shredding machine to a sea discharge or a hose for conveying from a tank towards a collection point.

A hose according to the present invention is also suitable to be used for conveying food products, such as for example beer, fruit juices, wine, food intermediaries for the canning industry.

The use of a hose as indicated above for waste, sewage or grey water discharge systems, in particular in boats or for the transportation of food products, also forms an object of the present invention.

Basically, the invention subject of the present invention consists in providing a hose preferably without liquid plasticising agents and provided with helical rigid reinforcement, so as to allow the use thereof even for suctioning and guarantee the non-deformability/resistance against crushing, should it be subjected to external stress and/or narrow radii of curvature, the hose also being capable of limiting emissions of odour from the internal of the hose towards the external or release harmful substances or substances capable of altering the food products subject of transportation, towards the internal or towards the axial opening AO.

As regards this, EP2032352B1 describes the manufacturing of a flexible hose made of thermoplastic material without liquid plasticising agents with a fabric reinforcement element.

The hose described in such patent cannot be used for suctioning too, guaranteeing non-deformability/resistance against crushing, should it be subjected to external stress and/or narrow radii of curvature.

In order to allow non-deformability/resistance against crushing, should it be subjected to external stress and/or narrow radii of curvature, a hose according to the present invention has a helical reinforcement element made of rigid polymeric material at ambient temperature selected so as to allow adhesion with the flexible part obtained by means of extrusion of TPE-S.

Regarding this, the elements for reinforcing hoses for conveying fluids are usually made of PVC-U.

Such compound cannot be used in a hose according to the present invention given the chemical incompatibility between the 2 materials (composition of the tubular layer and PVC-U) which could lead to the physical separation of the layers with the ensuing ineffectiveness of the obtained hose, especially should it be subjected to internal pressure.

The use of metal helical reinforcement could be very inconvenient in some cases due to the cutting difficulty thereof during connection operations, as well as the danger arising from possible exposed metal parts of the hose, which could be sharp and injure the operators.

Thus, materials compatible with the layer/layers made of TPE-S that can be used for obtaining the rigid helical reinforcement by means of extrusion, were selected.

Furthermore, the following compositions for the components of the hose were identified with the aim of obtaining the desired characteristics:
- the body or tubular layer preferably consisting of thermoplastic elastomer materials of the TPE-S type selected from among those described in EP2032352B1, preferably without liquid plasticisers at 23°C at a pressure equal to 1 atm.
- the reinforcement made of polypropylene polymers (PP), preferably homopolymer PP.

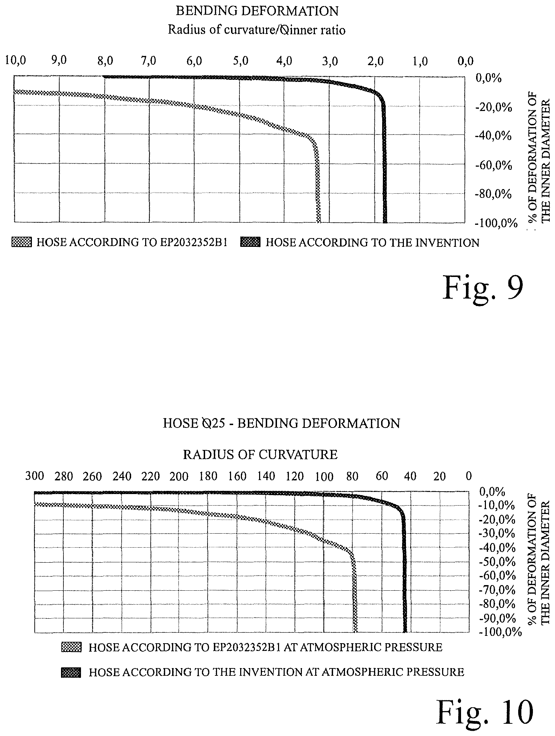

A hose according to the invention shows, with respect to a hose of the same diameter and thickness manufactured according to EP2032352B1, a considerable improvement as concerns the behaviour upon bending (see figures 9 and 10), i.e. a drastic drop of the percentage deformation of the inner diameter as the radius of curvature reduces. This entails a homogeneity of the flow rate of the fluid conveyed along the hose in a wide range of radii of curvature.

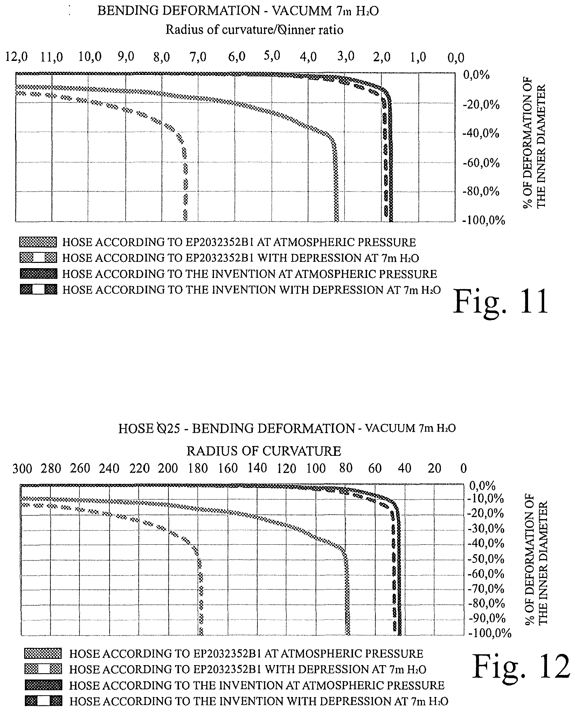

Furthermore, a hose according to the invention shows (see figures 11 and 12), with respect to a hose of the same diameter and thickness manufactured according to EP2032352B1, a high resistance against vacuum, a useful characteristic when required to convey fluids by suctioning.

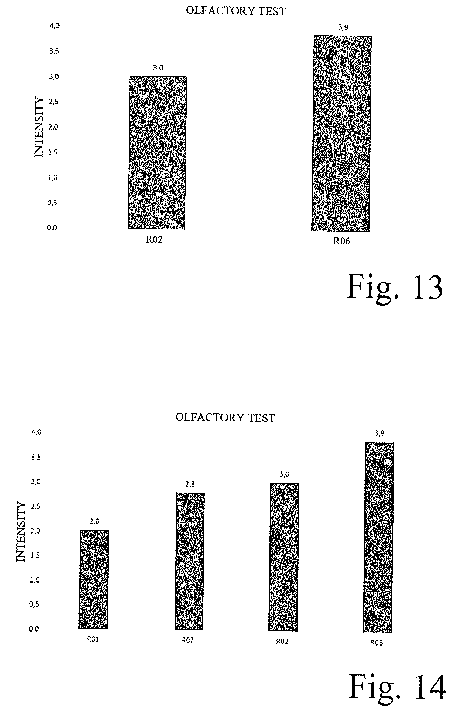

Figure 13 shows the results of a test conducted on two hoses R02 according to the invention and R06 not according to the invention, all having a helical reinforcement element made of homopolymer polypropylene and body made of TPE-S obtained by mixing SEBS and polypropylene and additives assisting the processing, having the same thickness.

More in particular, the hoses used were composed as indicated below:
R06: TPE-S with 15% liquid plasticisers at 23°C, 50 Shore A hardness according to ISO 868
R02: TPE-S without liquid plasticisers at 23°C, 50 Shore A hardness according to ISO 868

The tests reveal that a TPE-S with liquid plasticisers at 23°C is inherently less effective at hindering the spread of bad odours if compared to a TPE-S without liquid plasticisers at 23°C, considering the same thickness and hardness. Thus, use of TPEs without liquid components is to be preferred.

Figure 14 shows the results of a test conducted on four hoses R01, R02 according to the invention, R06 and R07 not according to the invention all having a helical reinforcement element made of homopolymer polypropylene and body made of TPE-S obtained by mixing SEBS and polypropylene and additives assisting the processing, having the same thickness.

More in particular, the hoses used were composed as indicated below:
R01: TPE-S without liquid plasticisers at 23°C, 50 Shore A hardness according to ISO 868, with an inner layer with average thickness of 0.3mm, containing 1% of zinc ricinoleate
R07: TPE-S with 15% liquid plasticisers at 23°C, 50 Shore A hardness according to ISO 868, with an inner layer with average thickness of 0.3mm, containing 1% of zinc ricinoleate
R02: TPE-S without liquid plasticisers at 23°C, 50 Shore A hardness according to ISO 868
R06: TPE-S with 15% liquid plasticisers at 23°C, 50 Shore A hardness according to ISO 868

Upon comparing R01 with R07, R02 with R06, it is observed that the presence of a liquid plasticiser has a negative impact on the transmission of the malodorous substances.

Thus, the use of compositions without liquid plasticiser is preferred.

In many applications it is necessary that the phenomena described above do not occur, but the use of a rubber hose is often not convenient as it would be too expensive.

In addition, it will be observed that due to thermal and/or mechanical stresses, plasticising agents are subjected to migration phenomena with release into the surrounding environment and/or into the fluid subject of transportation, with ensuing pollution problems (in particular unacceptable in food and pharmaceutical products applications) and/or alterations of the mechanical properties in the long-term.

Furthermore, following the migration, the hose stiffens, loses its initial flexibility and ends up cracking and losing the initial effectiveness. The presence of substances of non-polymeric nature, not chemically bonded to the polymeric matrix, like the liquid plasticisers, can convey the through-flow of substances from the internal to the external of the hose, or vice versa, thus also odours in some cases.

Basically, the liquid plasticiser is not chemically bonded to the polymeric phase and thus, if present, it can be potentially released at 100% into the surrounding environment and/or thus to the fluid subject of transportation.

Thus, the tubular layer 2 or 3 of a hose according to the present invention preferably does not comprise liquid plasticisers.

A hose according to the present invention in particular applies to waste, sewage or grey water discharge systems, in particular in boats, such as for example:
- a hose for suctioning seawater for supplying the WC;
- a delivery hose towards a tank, if present in the installation;
- a hose for conveying from the tank to a shredding machine, if present in the installation;
- a hose for conveying from a shredding machine to a sea discharge;
- a hose for conveying from a tank, if present in the installation, towards a collection point;
- other hose present in the platform.

A hose according to the present invention could also be used for managing grey water coming from systems different from those indicated above, for example for showers, sinks, kitchens, dishwashers, washing machines, etcetera.

Alternatively, as indicated above, a hose according to the present invention could be used for conveying food products, such as for example beer, fruit juices, wine, food intermediaries for the canning industry.

A hose 1 according to the present invention can be obtained using any suitable method.

Thus, for example a method for manufacturing a hose for conveying fluids according to the present invention comprises the following steps:
- forming - for example by extrusion or injection moulding or by casting, or construction on spindle - an inner tubular layer or first tubular layer 2, and forming - for example by extrusion or injection moulding, or by casting, or construction on spindle - a reinforcement element 4 in the inner tubular layer or first tubular layer 2.
- applying - for example by extrusion or injection moulding or by casting, or construction on spindle - an outer tubular layer or second tubular layer 3 around the inner tubular layer 2.

Alternatively, a method for manufacturing a hose for conveying fluids according to the present invention comprises the following steps:
- forming - for example by extrusion or injection moulding or by casting, or construction on spindle - an inner tubular layer or first tubular layer 2,
- applying - for example by extrusion or injection moulding or by casting, or construction on spindle - an outer tubular layer or second tubular layer 3, around the inner tubular layer 2 and forming - for example by extrusion or injection moulding, or by casting, or construction on spindle - a reinforcement element 4 in the outer tubular layer or second tubular layer 3.

A method according to an embodiment of the present invention for manufacturing a hose for conveying fluids, for example a hose 1 as described above, comprises the following steps:
- providing a spindle (not illustrated in the figures) and driving it in rotation in one direction or in the other around an axis x-x, preferably in a continuous fashion always in the same rotation direction,
- manufacturing or extruding a first strip made of polymeric material,
- applying - on the spindle according to a spiral or helical extension - the first strip made of polymeric material, so as to form an inner tubular layer 2 obtained by means of a plurality of first turns or substantially circular sections 2a of the first strip constrained to each other and each arranged close to or at contact with the turns 2a adjacent thereto, more in particular by firstly applying a first turn 2a and then the other turns 2a progressively one next to the other and with respective substantially aligned inner and outer faces,
- manufacturing or extruding a second strip 3 made of polymeric material,
- during or at the end of the formation of the inner tubular layer 2, though keeping the or a spindle in rotation or however driving or keeping the inner tubular layer 2 in rotation, applying - around the inner tubular layer 2 according to a spiral or helical extension - the second strip made of polymeric material, so as to form an outer tubular layer 3 obtained by means of a plurality of second turns or substantially circular sections 3a of the second strip each arranged close to or at contact with the second turns adjacent thereto and constrained to each other.

A reinforcement element 4 around which the inner 2 or outer 3 tubular layer is formed is also formed during or before the formation of the first 2 and/or second 3 tubular layer.

Optionally, a step for cooling and then hardening or solidifying the strips 3, 5 could be provided for after one or each step for applying them.

In a hose according to the present invention, the minimum thicknesses of the hose are comprised between 1 mm and 11 mm, preferably between 3.3 mm and 7.5 mm.

It is thus clear that a hose for conveying fluids has low odour emission and it can in particular be used in waste water discharge systems and as regards the food products transportation industry, such hose does not release harmful substances or substances capable of altering the food products subject of transportation, towards the internal.

Furthermore, a hose according to the present invention, in combination with the characteristics indicated now guarantees good resistance against crushing and the possibility of installation with very narrow radii of curvature.

Furthermore, the absence of liquid plasticisers and thus elements that can be released by the object, also determines maintaining the original flexibility in the long-term.

Modifications and variants of the invention can be implemented within the scope defined by the claims.

## Claims

1. Hose for conveying fluids, comprising a tubular layer (2, 3) and a reinforcement element (4, 4a) embedded in the volume of said tubular layer (2, 3) and designated to confer to the hose resistance to depression, pressure and compression, wherein said tubular layer (2, 3) is made of at least one thermoplastic elastomer of the TPE-S type, without liquid plasticisers at 23°C at a pressure equivalent to 1 atm, while said reinforcement element (4, 4a) is made of at least one polypropylene polymer (PP).

2. Hose according to claim 1, wherein said tubular layer (2, 3) is made of flexible polymeric material B comprising a thermoplastic compound C1 of polyolefin nature, preferably selected in the group comprising polypropylenes, polyethylenes or the like, and an elastomeric compound C2, which flexible polymeric material B is selected from polymeric materials substantially free of liquid plasticising agents or in the group comprising polymeric materials free of polyvinyl chloride (PVC), while said elastomeric compound C2 is selected in the group comprising SEBS, SEPS, EPDM and polyolefin elastomers, and wherein C1 and C2 are present in the following percentages by weight, wherein the weighted percentage of the sum C1 + C2 with respect to the weight of the flexible polymeric material B is identical for all samples:
a) %C1=50-%C2=50;
b) %C1=40-%C2=60;
c) %C1=30-%C2=70;
d) %C1=25-%C2=75;
e) %C1=20-%C2=80;
f) %C1=10-%C2=90; or
g) %C1=5-%C2=95.

3. Hose according to claim 1 or 2, wherein said at least one reinforcement element is made of homopolymer PP.

4. Hose according to claim 1 or 2 or 3, wherein said at least one reinforcement element is spiral-shaped.

5. Hose according to claim 1, 2, 3 or 4, comprising an inner tubular layer (2) and an outer tubular layer (3) applied on the inner tubular layer (2) and wherein said at least one reinforcement element (4, 4a) is embedded in the volume of said inner tubular layer (2) and/or of said outer tubular layer (3).

6. Hose according to claim 5, wherein said inner tubular layer (2) is obtained by means of a plurality of first turns (2a) made of extruded polymeric material, while said outer tubular layer (3) is made by means of a plurality of second turns (3a) made of extruded polymeric material.

7. Hose according to any one of the preceding claims for waste, sewage or grey water discharge systems, in particular in boats or for the transportation of food products.

8. Hose according to claim 7 comprising a sea water suctioning hose for supplying the WC, a delivery hose towards a tank, a hose for conveying from the tank to a shredding machine, a hose for conveying from a shredding machine to a sea discharge or a hose for conveying from a tank towards a collection point.

9. Hose according to any one of the preceding claims, wherein said tubular layer (2, 3) extends around the longitudinal symmetry axis (x-x) of the hose (1) over the entire longitudinal extension of the hose.

10. Use of a hose according to any one of the preceding claims for waste, sewage or grey water discharge systems, in particular in boats or for the transportation of food products.
